# EUROPÄISCHE PATENTSCHRIFT

(11) **EP 0 727 251 B1**
(45) Veröffentlichungstag und Bekanntmachung des Hinweises auf die Patenterteilung: **26.09.2001**
(21) Anmeldenummer: 96100155.9
(22) Anmeldetag: 08.01.1996
(51) Int. Cl.: B01J 13/16

(54) **Mikrokapseln mit Wänden aus Umsetzungsprodukten von Polyisocyanaten und Guanidinen**
Microcapsules having a wall of polyisocyanate/quanidine reaction products
Microcapsules à paroi constituée par des produits de réaction de polyisocyanates et quanidines

(30) Priorität: 19.01.1995 DE 19501479
(43) Veröffentlichungstag der Anmeldung: 21.08.1996
(73) Patentinhaber: BAYER AG, 51368 Leverkusen (DE)
(72) Erfinder: Nehen, Ulrich, Dr., D-51373 Leverkusen (DE); Weisser, Jürgen, Dr., D-41542 Dormagen (DE)

(56) Entgegenhaltungen:
- EP-A- 0 150 790

## Beschreibung

Die vorliegende Erfindung betrifft Mikrokapseln mit Wänden aus Umsetzungsprodukten von Polyisocyanaten und Guanidinen, deren Herstellung und verbesserte Durchschreibepapiere, die solche Mikrokapseln enthalten.

Mikrokapseln mit Wänden aus Polyharnstoff oder Polyharnstoff-Polyurethan werden üblicherweise nach einem Zweiphasen-Polyadditionsverfahren hergestellt. Dazu emulgiert man eine Ölphase, die ein organisches, mit Wasser nicht mischbares, inertes Lösungsmittel, Polyisocyanat und den zu verkapselnden Stoff enthält, in einer wäßrigen Phase, die Wasser und gegebenenfalls Zusatzstoffe wie Emulgatoren, Stabilisatoren und/oder die Koaleszenz verhindernde Stoffe enthält. Wenn man dieser Emulsion ein Polyamin oder einen Aminoalkohol zufügt, beginnt an der Grenzfläche der Öltröpfchen zur Wasserphase eine Polyadditionsreaktion von Amino- und/oder Hydroxylgruppen mit Isocyanatgruppen. Dies führt zu einer Umhüllung der Öltröpfchen mit einer Polyharnstoff- oder Polyharnstoff-Polyurethan-Wand. So bildet sich eine Dispersion von Mikrokapseln, die den zu verkapselnden Stoff und das organische Lösungsmittel enthalten. Die Größe der Mikrokapseln entspricht etwa der Größe der emulgierten Öltröpfchen.

Auch Wasser kann in die Polyadditionsreaktion eingreifen, z.B. indem es Isocyanatgruppen hydrolysiert, wobei Aminogruppen entstehen, die dann mit noch vorhandenen Isocyanatgruppen reagieren können.

Die Mengenverhältnisse der Reaktionspartner für die Polyaddition wählt man im allgemeinen so, daß alle vorhandenen Isocyanatgruppen abreagieren.

Als Polyisocyanate können die verschiedensten zwei- und höherfunktionellen Isocyanate mit aliphatischer oder aromatischer Struktur eingesetzt werden und als Polyamine die verschiedensten zwei- oder mehr NH₂-Gruppen pro Molekül enthaltenden Amine mit aliphatischer Struktur. Es können auch Hydrazin, Hydrazin-Derivate und/oder Aminoalkohole, die pro Molekül mindestens eine NH₂- und mindestens eine OH-Gruppe enthalten, eingesetzt werden.

Bekannte Mikroverkapselungsverfahren sind beispielsweise beschrieben in EP-A 227 562, DE-A 3 620 347, DE-A 3 635 823, JP-A-1-07 28 86 und EP-A 392 876.

Es ist auch schon vorgeschlagen worden, Salze von Polyaminen einzusetzen. Hierbei werden aus diesen durch Zusaz von Alkali freie, zur Polyaddition befähigte Amine erzeugt (siehe z.B. JP-A-4-27 70 27).

Das wichtigste Gebiet, auf dem Mikrokapseln angewendet werden, ist die Herstellung kohlefreier Durchschreibepapiere. Die Mikrokapseln enthalten in diesem Fall einen Farbstoffvorläufer. Beim Schreiben werden die Mikrokapseln an den Stellen zerstört, wo hinlänglich hoher Druck ausgeübt wird. Der austretende Farbstoffvorläufer ergibt dann unter der Einwirkung eines Entwicklers ein Schriftbild. Die Intensität des Schriftbildes und die Geschwindigkeit, mit der sich aus dem Farbstoffvorläufer das Schriftbild ergibt sich u.a. von der mechanischen und chemischen Beschaffenheit der Kapselwand abhängig und häufig nicht voll befriedigend.

Die bisher eingesetzten Polymaine und Aminoalkohole werden über chlororganische Zwischenprodukte hergestellt. Bei deren Herstellung und Handhabung muss ein gewisser Aufwand getrieben werden, um die ökologische Unbedenklichkeit zu gewährleisten. Hydrazinverbindungen sind als solche giftig und erfordern deshalb auch erhöhten Aufwand bei ihrer Handhabung.

Es wurden nun Mikrokapseln gefunden, die dadurch gekennzeichnet sind, dass ihre Wände aus Umsetzungsprodukten von Guanidinverbindungen der Formel (I) 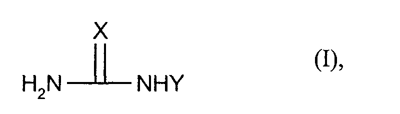 in der 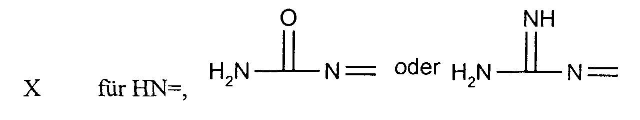 und

Y für H―, NC―, H₂N―, HO―

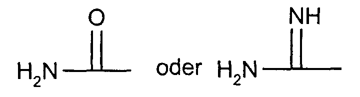

stehen, oder deren Salze mit Säuren und Polyisocyanaten bestehen oder solche Umsetzungsprodukte enthalten.

Die Stammverbindung Guanidin ist im Gegensatz zu organischen Aminen aus den preiswerten und gut handhabbaren anorganischen Rohstoffen Kalk, Koks und Stickstoff ohne die Verwendung von elementarem Chlor zugänglich (siehe z.B. Ullmanns Encyclopädie der technischen Chemie, 4. Auflage, Weinheim 1975, Band 9, Seiten 70 und 642; Band 10, Seite 146 und Band 12, Seite 411).

Die erfindungsgemäß mit Hilfe von Polyisocyanaten und Guanidinverbindungen hergestellte Mikrokapseln zeigen in ihrer praktischen Anwendung bei kohlefreien Durchschreibepapieren im Allgemeinen ein höhere Durchschreibeintensität als Mikrokapseln, die aus Polyisocyanaten und Di- oder Polyaminen gemäß des Standes der Technik hergestellt wurden. Dies ist neben der ökologisch günstigen Rohstoffbasis ein besonderer anwendungstechnischer Vorteil erfindungsgemäßer Mikrokapseln.

Beispielsweise kann es sich bei den Salzen der erfindungsgemäß einzusetzenden Guanidinverbindungen der Formel (I) um Salze von Kohlensäure, Salpetersäure, Schwefelsäure, Salzsäure, Kieselsäure, Phosphorsäure, Ameisensäure und/oder Essigsäure handeln. Der Einsatz von Salzen von Guanidinverbindungen der Formel (I) kann in Kombination mit anorganischen Basen erfolgen, um in situ aus den Salzen die freien Guanidinverbindungen der Formel (I) zu erhalten. Als anorganische Basen für diesen Zweck kommen z.B. Alkali- und/oder Erdalkalihydroxide und/oder Erdalkalioxide infrage. Bevorzugt sind wässrige Lösungen oder Aufschlämmungen dieser Basen, insbesondere wässrige Natronlauge, wässrige Kalilauge und wässrige Lösungen oder Aufschlämmungen von Kalziumhydroxid. Es können auch Kombinationen mehrerer Basen angewendet werden.

Häufig ist es vorteilhaft, die Guanidinverbindungen der Formel (I) als Salze einzusetzen, weil sie in dieser Form im Handel erhältlich und die freien Guanidinverbindungen zum Teil in Wasser schwer löslich oder nicht lagerstabil sind. Wenn man anorganische Basen einsetzt, können diese in stöchiometrischen, unterstöchiometrischen und überstöchiometrischen Mengen, bezogen auf Salze von Guanidinverbindungen, verwendet werden. Vorzugsweise setzt man 10 bis 100 Äquivalent-% anorganische Base (bezogen auf Salze der Guanidinverbindungen) ein. Die Zugabe anorganischer Basen hat zur Folge, daß bei der Mikroverkapselung in der wäßrigen Phase Guanidinverbindungen mit freien NH₂-Gruppen zur Reaktion mit den in der Ölphase enthaltenden Polyisocyanaten zur Verfügung stehen. Bei der Mikroverkapselung erfolgt die Zugabe von Salzen von Guanidinverbindungen und Basen zweckmäßigerweise so, daß man sie getrennt der wäßrigen Phase zufügt.

Vorzugsweise wird Guanidin oder werden Salze von Guanidin mit Kohlensäure, Salpetersäure, Schwefelsäure, Salzsäure, Kieselsäure, Phosphorsäure, Ameisensäure und/oder Essigsäure eingesetzt.

Besonders vorteilhaft ist es, Salze von Guanidinverbindungen mit schwachen Säuren einzusetzen. Diese befinden sich in wäßriger Lösung in Folge Hydrolyse im Gleichgewicht mit der entsprechenden freien Guanidinverbindung. Die freie Guanidinverbindung wird während des Verkapselungsprozesses verbraucht und bildet sich gemäß dem Massenwirkungsgesetz laufend nach. Diesen Vorteil zeigt in besonderer Weise das Guanidincarbonat. Beim Einsatz von Salzen von Guanidinverbindungen mit schwachen Säuren ist ein Zusatz anorganischer Basen zur Freisetzung der freien Guanidinverbindungen nicht erforderlich.

Die für die vorliegende Erfindung in Frage kommenden Guanidinverbindungen der Formel (I) können auch durch Ionenaustausch aus ihren wasserlöslichen Salzen nach dem Stand der Technik mit Hilfe handelsüblicher basischer Ionenaustauscher hergestellt werden. Man kann das Eluat aus dem Ionenaustauscher direkt zur Kapselwandbildung heranziehen, indem man es mit der Öl-in-Wasser-Emulsion vermischt.

Beispielsweise kann man soviel Guanidinverbindungen einsetzen, daß pro Mol NCO-Gruppen, die als Polyisocyanat in der Ölphase vorliegen 0,2 bis 4,0 Mol an freien NH₂-Gruppen in Form von Guanidinverbindungen in die Wasserphase eingebracht oder dort freigesetzt werden. Vorzugsweise beträgt diese Menge 0,5 bis 1,5 Mol. Beim Einsatz von Guanidinverbindungen in unterstöchiometrischer Menge verbleiben nach der Reaktion mit dem Polyisocyanat noch freie NCO-Gruppen. Diese reagieren dann im allgemeinen mit Wasser, was üblicherweise nicht kritisch ist, weil dabei neue, freie, zur Vernetzung fähige Aminogruppen entstehen.

Vorzugsweise werden die Guanidinverbindungen in Form wäßriger Lösungen eingesetzt. Die Konzentration solcher Lösungen ist unkritisch und im allgemeinen nur durch die Löslichkeit der Guanidinverbindungen in Wasser begrenzt. Geeignet sind z.B. 1 bis 20 gew.-%ige wäßrige Lösungen von Guanidinverbindungen.

Als Polyisocyanate können zur Herstellung erfindungsgemäßer Mikrokapseln die verschiedensten aliphatischen, aromatischen und aromatisch-aliphatischen 2- und höherfunktionellen Isocyanate eingesetzt werden, insbesondere solche, die zur Herstellung von Mikrokapseln bekannt sind. Vorzugsweise werden aliphatische Polyisocyanate eingesetzt. Besonders bevorzugt eingesetzt werden: Hexamethylendiisocyanat, Isophorondiisocyanat und/oder freie Isocyanatgruppen aufweisende Derivate des Hexamethylendiisocyanats und des Isophorondiisocyanats, die Biuret-, Isocyanurat-, Uretdion- und/oder Oxadiazintriongruppen enthalten. Es können auch Gemische verschiedener Polyisocyanate eingesetzt werden. Einige einsetzbare Polyisocyanate sind z.B. beschrieben in EP-A 227 562, EP-A 164 666 und EP-A 16 378.

Die erfindungsgemäßen Mikrokapseln werden vorzugsweise zur Herstellung kohlefreier Durchschreibepapiere verwendet. Sie enthalten deshalb als verkapselten Stoff vorzugsweise Farbstoffvorläufer. Es kommen hierfür Farbstoffvorläufer der verschiedensten Typen in Frage, insbesondere Triphenylmethanverbindungen, Diphenylmethanverbindungen, Bisindolylphthalidverbindungen, Bisarylcarbazolylmethanverbindungen, Xanthenverbindungen, Benzoxazinverbindungen, Thiazinverbindungen und Spiropyranverbindungen, insbesondere solche, die als Farbstoffvorläufer zur Herstellung kohlefreier Durchschreibepapiere bekannt sind. Es können auch Gemische mehrerer Farbstoffvorläufer eingesetzt werden. Einige einsetzbare Farbstoffvorläufer sind z.B. beschrieben in EP-A 591 106, EP-A 315 901, EP-A 234 394, DE-A 3 622 262 und EP-A 187 329.

Als organische mit Wasser nicht mischbare und inerte Lösungsmittel, die bei der Herstellung der Mikrokapseln zusammen mit dem zu verkapselten Stoff und dem Polyisocyanat Bestandteil der Ölphase sind, kommen z.B. aromatische, aliphatische und naphthenische Kohlenwasserstoffe, Carbonsäureester, chlorierte Paraffine, Öle tierischer und pflanzlicher Herkunft, natürliche Fette mit Schmelzpunkten im Bereich 10 bis 35°C und über 100°C siedende aromatische und aliphatische Ether infrage. Es können auch Gemische mehrerer Lösungsmittel eingesetzt werden.

Bei der Herstellung erfindungsgemäßer Mikrokapseln kann die wässrige Phase gegebenenfalls Emulgatoren, Stabilisatoren und/oder die Koaleszenz verhindernde Stoffe enthalten. Emulgatoren kann gegebenenfalls auch die Ölphase enthalten. Die Menge derartiger Zusätze kann z.B. im Bereich 0 bis 2 Gew.-%, bezogen auf die jeweilige Phase liegen.

Erfindungsgemäße Mikrokapseln können nicht nur Farbstoffvorläufer enthalten, sondern auch beispielsweise Parfümöle, Duftstoffe, Klebstofe, Pharmazeutika, Insektizide, Fungizide, Herbizide und Repellants. Die zu verkampselnden Stoffe dürfen unter den Verkapselungsbedingungen natürlich nicht mit Isocyanaten reagieren.

Erfindungsgemäße Mikrokapseln können nach an sich bekannten kontinuierlichen und diskontinuierlichen Verfahren hergestellt werden, wobei dann als Vernetzer nicht die üblichen Polyamine sondern Guanidinverbindungen der Formel (I) oder deren Salze gegebenenfalls in Kombination mit anorganischen Basen einzusetzen sind. Ebenso führe der Einsatz basisch reagierender Salze von Guanidinverbindungen mit schwachen Säuren zu guten Resultaten. Diese Arbeitsweise ist technisch besonders vorteilhaft, da die freie Base nicht gesondert hergestellt werden muss, z.B. durch Zusatz von anorganischen Basen oder durch Ionenaustausch.

Man kann sowohl die Herstellung der Emulsion enthaltend Tröpfchen einer Ölphase und eine kontinuierliche wässrige Phase, als auch die Zugabe von Guanidinverbindungen kontinuierlich und diskontinuierlich durchführen.

Diskontinuierlich kann man z.B. so verfahren, dass man zu einer Emulsion, die Öltröpfchen etwa in der Größe der gewünschten Mikrokapseln enthält, bei 10 bis 50°C soviel einer Guanidinverbindung zufügt, wie stöchiometrisch für die Reaktion aller in der Ölphase vorhandenen Isocyanatgruppen benötigt wird. Stehen Guanidinverbindungen als Salze zur Verfürung, so kann man gegebenenfalls zunächst aus einer wässrigen Lösung des jeweiligen Salzes mit Hilfe eines Anionenaustauschers eine wässrige Lösung der freien Guanidinverbindung gewinnen und diese einsetzen. Es wird davon ausgegangen, das alle in Guanidinverbindungen vorhandenen oder aus Salzen von Guanidinverbindungen gebildeten NH₂-Gruppen mit NCO-Gruppen reagieren können. Bei Guanidin und Guanidinsalzen (Formel (I), X = NH, Y = H) wird also davon ausgegangen, dass ein Mol davon mit 2 Molen NCO-Gruppen reagieren kann.

Das Zusammentreffen von freien Guanidinverbindungen und in der Ölphase befindlichen Polyisocyanaten bewirkt an Grenzflächen der Öltröpfchen zur wässrigen Phase den Start einer Polyadditionsreaktion, die auch als Vernetzung bezeichnet wird. Diese kann man gewünschtenfalls bei erhöhter Temperatur, z.B. bis zum Siedepunkt der wässrigen Phase, vervollständigen. Es resultiert eine Dispersion von Mikrokapseln in Wasser, deren Kapselgehalt bis zu ca. 60 Gew.-% betragen kann. Unter Kapselgehalt wird dabei das Gewichtsverhältnis von Ölphase inclusive des Isocyanats zu wässriger Phase in der Ausgangsemulsion verstanden. Bei der Berechnung des Kapselgehaltes wird die an der Wandbildung beteiligte Guanidinverbindung sowie gegebenenfalls eingesetzte anorganische Base nicht berücksichtigt.

Man kann der oben erwähnten Emulsion auch Salze von Guanidinverbindungen der Formel (I) zusetzen. Man hält die Temperatur dann unter 60°C und kann dann eine anorganische Base der beschriebenen Art zugeben. Vorzugsweise in stöchiometrischer Menge, bezogen auf das Salz. Dabei werden in situ Guanidinverbindungen freigesetzt, die dann in der o.a. Weise reagieren. Bei Salzen aus Guanidinverbindungen und schwachen Säuren, die in Gegenwart von Wasser hydrolytisch gespalten werden und dann Anteile freier Guanidinverbindungen enthalten, kann die Zugabe anorganischer Basen entfallen. Dies trifft insbesondere auf Guanidincarbonat zu.

Kontinuierlich kann man z.B. so verfahren, dass man in einer Emulgiermaschine im Durchlaufverfahren kontinuierlich eine Emulsion der gewünschten Art und Öltröpfchengröße erzeugt. Danach kann man ohne die Einwirkung von Scherkräften z.B. bei 25 bis 50°C kontinuierlich eine wässrige Lösung einer Guanidinverbindung der Formel (I) und gegebenenfalls in einem nachgeschalteten Reaktionsgefäß, falls erforderlich, die zur Freisetzung von Guanidinverbindungen aus Salzen erforderliche anorganische Base zusetzen. In weiteren Reaktionsgefäßen kann dann, gegebenenfalls bei Temperaturen bis zu 100°C, die Polyadditionsreaktion zu Ende geführt werden.

Die erfindungsgemäße Mikrokapseln haben eine Reihe von Vorteilen. Sie weisen gute mechanische und chemische Stabilität auf, ergeben beim Einsatz für kohlefreie Durchschreibepapiere schnell ein intensives Schriftbild und werden mit großtechnisch verfügbaren Guanidinverbindungen hergestellt, die aus den Beisteinen Kalk, Koks und Stickstoff in einfacher, konstengünstiger und wenig Aufwand erfordernden Weise zugänglich sind.

Die vorliegende Erfindung betrifft auch ein Verfahren zur Herstellung von Mikrokapseldispersionen, bei der man eine Ölphase, die ein organisches, mit Wasser nicht mischbares inertes Lösungsmittel, den zu verkapselnden Stoff und ein Polyisocyanat enthält, in einer Wasserphase, die gegebenenfalls Zusatzstoffe enthält, emulgiert und der Emulsion einen Stoff zufügt, der mit Isocyanatgruppen Additionsreaktionen eingehen kann, das dadurch gekennzeichnet ist, dass man der Emulsion eine Guanidinverbindung der Formel (I) zufügt.

Schließlich betrifft die vorliegende Erfindung auch kohlefreie Durchschreibepapiere, die Farbstoffvorläufer in mikroverkapselter Form enthalten und dadurch gekennzeichnet sind, dass die Wände der Mikrokapseln Umsetzungsprodukte von Guanidinverbindungen der Formel (I) mit Polyisocyanaten enthalten.

Für das erfindungsgemäße Herstellungsverfahren für Mikrokapseldispersionen und das erfindungsgemäße kohlefreie Durchschreibepapier gelten die oben gemachten Ausführungen zu den erfindungsgemäße Mikropaseln entsprechend.

### Beispiele

Prozentangaben sind Gewichtsprozente, soweit nichts anderes angegeben ist.

### Beispiel 1

a) Herstellung einer Mikrokapseldispersion
   Für die Herstellung von Mikrokapseln zum Einsatz auf dem Gebiet kohlefreier Durchschreibepapiere wurde zunächst eine Ölphase zubereitet, indem ein Farbstoffvorläufergemisch bestehend aus 15 g Kristallviolettlacton, 7,5 g eines blauentwickelnden Farbstoffs vom Bisarylcarbazolylmethan-Typ (Pergascript® blau S-RB) und 2,5 g eines rotentwickelnden Farbstoffvorläufers vom Bisindolylphthalid-Typ (Pergascript® Rot I6B) bei 120°C in 975 g Diisopropylnaphthalin gelöst und 360 g dieser Lösung bei Raumtemperatur mit 40 g 1,3,5-Tris-(6-isocyanatohexyl)-isocyanurat (NCO-Gehalt 21,5 %) versetzt wurden. Diese Ölphase wurde mit 521,9 g einer Wasserphase bestehend aus einer 1 gew.-%igen wäßrigen Polyvinylalkohollösung zusammengebracht, durch Rühren eine grobe Voremulsion hergestellt und durch 8-minütiges Emulgieren mit einer Mischsirene (8 950 U/min) eine Feinemulsion erhalten. Die erhaltene Feinemulsion wurde bei Raumtemperatur mit 74,2 g einer 8,15 %igen wäßrigen Guanidin-Lösung versetzt, das entstandene Gemisch innerhalb von 1 Stunde unter Rühren auf 60°C erwärmt und 3 Stunden bei dieser Temperatur nachgerührt. Es bildete sich eine ca. 40 %ige Mikrokapsel-Dispersion, deren Mikrokapseln eine durchschnittliche Größe von 7,8 µm aufwiesen.
b) Herstellung eines kohlefreien Durchschreibepapieres
   12,9 g der gemäß a) erhaltenen Mikrokapseldispersion, 2,05 g eines Abstandhalters auf Cellulosebasis (Arbocell® BE600/30) 2,01 g eines Binders auf Styrol-Butadien-Latex-Basis (Baystal® P KA8588) und 26,3 g deionisiertes Wasser wurden vermischt und dieses Gemisch mittels einer Drahtrakel (40 µ) auf die Rückseite eines handelsüblichen CF-Papiers aufgebracht und mit einem Strom warmer Luft getrocknet. (CF-Papier bedeutet coated front, d.h. ein Papier, auf dessen Oberseite ein Entwickler für Farbstoffvorläufer aufgebracht ist.) So wurde ein CFB-Papier erhalten, das 5,5 g/m² einer Schicht enthält, die mikroverkapselten Farbstoffvoräufer, Abstandshalter und Binder enthielt. (CFB-Papier bedeutet coated front and back, d.h. ein Papier, auf dessen Oberseite ein Entwickler für Farbstoffvorläufer und auf dessen Unterseite ein mikroverkapselter Farbstoffvorläufer aufgebracht ist.) Das CFB-Papier wurde so auf ein weiteres CF-Papier gelegt, daß die Entwicklerschicht des CF-Papiers und die Farbstoffvorläufer-Schicht des CFB-Papiers sich berührten. Mittels eines Drucktesters (IGT-Tester A1) wurde bei einer eingestellten Druckkraft von 600 N die CF-Seite des CFB-Papiers belastet und so ein blauer Abdruck auf dem CF-Papier erzeugt. Dessen Farbintensität wurde mit einem McBeth-Densitometer bestimmt. Es ergab sich ein Wert von 0,44 (je größer die Zahl, je farbintensiver der Abdruck).

### Beispiel 2

360 g einer nach Beispiel 1 hergestellten Ölphase wurden mit 40 g Oxadiazintrion des Hexamethylendiisocyanats (NCO-Gehalt 20,6 % - hergestellt nach DE-A 16 70 664) versetzt und wie in Beispiel 1 beschrieben mit 454,4 g 1 %iger wäßriger Polyvinylalkohollösung zu einer Öl-in-Wasser-Emulsion verarbeitet. Die resultierende Emulsion wurde bei Raumtemperatur mit einer Lösung bestehend aus 11,9 g Guanidinnitrat, 3,9 g Natriumhydroxid und 123,5 Wasser versetzt, innerhalb von 3 Stunden auf 60°C aufgeheizt und bei 60°C weitere 4 Stunden gerührt. Es wurde eine Dispersion mit einem Kapselgehalt von ca. 41 % und einer mittleren Teilchengröße von 7,4 µm erhalten, die nach dem Aufstreichen auf Papier und Messung (wie in Beispiel 1 beschrieben) einen Abdruck mit dem Intensitätswert 0,55 lieferte.

### Beispiel 3

Es wurde wie unter Beispiel 1 beschrieben verfahren. Anstelle des dort beschriebenen Polyisocyanats wurden jedoch 40 g eines trimeren Hexamethylendiisocyanats mit Biuretstruktur und einem NCO-Gehalt von 23,4 % verwendet. Aus der Ölphase und 482 g einer Polyvinylalkohollösung (1 %ig in Wasser) wurde unter hohem Scherfeld eine Öl-in-Wasser-Emulsion erzeugt, die durch Zugabe einer Lösung aus 13,6 g Guanidinnitrat, 4,5 g Natriumhydroxid und 118 g Wasser bei Raumtemperatur in eine Kapseldispersion umgewandelt wurde. Die Reifung der Dispersion geschah unter langsamem Rühren bei 60°C während 4 Stunden. Die resultierende Kapseldispersion wies einen mittleren Teilchendurchmesser von 7,7 µm und einen Kapselgehalt von 40 % auf. Nach Aufstreichen auf Papier und Messung (wie unter Beispiel 1 beschrieben) wurde ein Abdruck mit einem Intensitätswert von 0,54 erhalten.

### Beispiel 4

360 g der in Beispiel 1 beschriebenen Ölphase wurden mit 40 g Oxadiazintrion des Hexamethylendiisocyanats (NCO-Gehalt 20,6 % - hergestellt nach DE-A 16 70 664) versetzt und wie beschrieben mit 506 g wäßriger 1 %iger Polyvinylalkohollösung zu einer Öl-in-Wasser-Emulsion verarbeitet. Parallel hierzu wurde eine Lösung aus 9,4 g Guanidincarbonat in 84,7 g Wasser hergestellt und anschließend unter langsamem Rühren bei einer Temperatur von 50°C zu der Öl-in-Wasser-Emulsion zugetropft. Dabei wurde laufend der pH-Wert der Mischung gemessen und die Geschwindigkeit des Zutropfens so eingestellt, daß der pH-Wert zwischen 8 und 9 blieb. Es wurde danach noch 1 Stunde bei 60°C nachgerührt. Die resultierende Dispersion wies einen Kapselgehalt von ca. 40 % und eine mittlere Teilchengröße von 7,0 µm auf. Nach Aufstreichen auf Papier und Messung (wie unter Beispiel 1 beschrieben) wurde ein Abdruck mit einem Intensitätswert von 0,62 erhalten.

### Beispiel 5

Es wurde wie in Beispiel 3 verfahren, jedoch wurde statt Guanidinnitrat Guanidincarbonat und keine Natronlauge verwendet und die Isocyanatmenge reduziert.

Guanidincarbonat: 70,0 g einer 10 %igen Lösung in Wasser Isocyanat: 28 g Biuret des Hexamethylendiisocyanats, NCO-Gehalt 23,4 % Farbgeberlösung: 372 g, Typ wie in Beispiel 1 beschrieben Wasserphase: 537 g 1 %ige wäßrige Polyvinylalkohollösung

Nach Zugabe der Guanidincarbonatlösung bei Raumtemperatur wurde die Dispersion innerhalb von 1 Stunde auf 58°C aufgeheizt und bei dieser Temperatur noch 4 Stunden nachgerührt. Es resultierte eine ca. 40 %ige Mikrokapseldispersion mit einer mittleren Teilchengröße von 6,0 µm. Die Prüfung auf das Durchschreibeverhalten wurde wie in Beispiel 1 durchgeführt und ergab einen Intensitätswert von 0,51.

### Beispiel 6

380 g einer wie in Beispiel 1 beschrieben hergestellten Farbgeberlösung wurden mit 20 g eines Polyisocyanats, bestehend überwiegend aus dem Uretdion des Hexamethylendiisocyanates mit einem NCO-Gehalt von 22,5 % vermischt. Nach Zugabe von 55,6 g 1 %iger wäßriger Polyvinylalkohollösung wurde unter hohem Scherfeld eine Öl-in-Wasser-Emulsion hergestellt, deren Tröpfchengröße der gewünschten Kapsel entsprach. Bei Raumtemperatur wurde diese Emulsion unter vorsichtigem Rühren mit einer Lösung von 4,8 g Guanidincarbonat in 43,3 g Wasser versetzt und die Mischung innerhalb von 75 Minuten auf 80°C aufgeheizt. Nach 4-stündigem Rühren bei dieser Temperatur wurde die resultierende Kapseldispersion analysiert. Es ergaben sich folgende Werte:
mittlerer Kapseldurchmesser: 8,1 µm
Kapselgehalt: 40,8 %
Intensitätswert: 0,54 (bestimmt wie in Beispiel 1 beschrieben).

### Beispiel 7

360 g einer wie in Beispiel 1 beschrieben hergestellten Farbgeberlösung wurden mit 40 g Polyisocyanat-Mischung versetzt, wobei letztere einen NCO-Gehalt von 22,1 % aufwies und zu 20 % aus dem Oxadiazintrion und zu 80 % aus dem Uretdion des Hexamethylendiisocyanats bestand. Nach Zugabe von 544,5 g 1 %iger wäßriger Polyvinylalkohollösung wurde unter hohem Scherfeld emulgiert. Bei Raumtemperatur wurde diese Emulsion unter vorsichtigem Rühren mit einer Lösung bestehend aus 6,4 g Guanidinnitrat, 2,1 g Natriumhydroxid und 55,5 g Wasser versetzt. Anschließend wurde unter Rühren die Temperatur der Dispersion innerhalb von 60 Minuten auf 58°C erhöht und weitere 4 Stunden bei dieser Temperatur nachgerührt. Die resultierende Dispersion wies einen Kapselgehalt von ca. 40 % und einen mittleren Kapseldurchmesser von 6,9 µm auf. Der Intensitätswert, gemessen wie in Beispiel 1, betrug 0,52.

### Beispiel 8

360 g einer wie in Beispiel 1 beschrieben hergestellten Farbgeberlösung wurden mit 40 g eines Polyisocyanats vermischt, das durch Umsetzung von Isocyanuratgruppen aufweisendem Hexamethylendiisocyanat-Trimer mit Polyetheralkohol (gemäß EP-A 206 059) erhalten worden war und einen NCO-Gehalt von 19,5 % aufwies. Aus dieser Mischung und 554 g 1 %iger wäßriger Polyvinylalkohollösung wurde unter reduziertem Scherfeld, ansonsten aber wie in Beispiel 1 beschrieben, eine Emulsion hergestellt. Die Umwandlung in eine Kapseldispersion geschah bei Raumtemperatur durch Zugabe von 51 g einer 10 %igen Guanidinlösung in Wasser, hergestellt durch Ionenaustausch einer Guanidincarbonatlösung an einem basischen Ionenaustauscher. Die resultierende Dispersion wurde wie in Beispiel 7 beschrieben nachbehandelt. Die Untersuchung ergab einen Kapselgehalt von ca. 41 %, einen mittleren Kapseldurchmesser von 9,9 µm und einen Intensitätswert von 0,40 (gemessen wie in Beispiel 1).

### Beispiel 9

372 g einer wie in Beispiel 1 beschrieben hergestellten Ölphase wurden mit 28 g einers trimeren Hexamethylendiisocyanats mit Biuretstruktur (NCO-Gehalt 23,4 %) versetzt und wie in Beispiel 1 beschrieben mit 494 g wäßriger 1 %iger Polyvinylalkohollösung zu einer Öl-in-Wasser-Emulsion verarbeitet. Die erhaltene Emulsion wurde bei Raumtemperatur mit einer Aufschlämmung bestehend aus 10,6 g Aminoguanidincarbonat in 95,4 g Wasser unter langsamem Rühren versetzt. Anschließend wurde die Temperatur der Mischung innerhalb von 60 Minuten auf 60°C erhöht. Dabei wurde laufend der pH-Wert kontrolliert und durch entsprechende Zugabe von 20 %iger wäßriger Natronlauge im Bereich von 8 bis 9 gehalten. Man rührte noch 4 Stunden bei 60°C nach. Die resultierende Dispersion wies einen Kapselgehalt von ca. 41 % und eine mittlere Teilchengröße von 6,5 µm auf. Nach dem Aufstreichen auf Papier und Messung wie in Beispiel 1 beschrieben wurde ein Intensitätswert von 0,42 ermittelt. Die Dichtigkeitsprüfung (durchgeführt wie in Beispiel 10) angegeben, zeigte das Vorliegen von dichten Kapseln.

### Beispiel 10

Aus 25 g Kristallviolettlacton und 975 g eines Diisopropylnaphthalin-Isomerengemischs wurde bei 100°C eine 2,5 %ige, klare Lösung hergestellt, von der nach Abkühlung 720 g in ein Becherglas abgewogen, mit 80 g Isocyanurat des Hexamethylendiisocyanats (Desmodur® N 3300, NCO-Gehalt 21,5 %) versetzt und homogenisiert. Zu dieser Lösung wurden 1100 g eines 1 %igen wäßrigen Polyvinylalkohols (Polyvinylalkohol des Typs AIRVOL® 523) gegeben und durch schnelles Rühren mit einem Ankerrührer zu einer groben Voremulsion verarbeitet. Durch weiteres schnelles Emulgieren mittels einer hochtourigen Mischsirene (9000 U/min) wurden die Öltröpfchen bis zu einer Tröpfchengröße von 7 µm zerteilt. Die Emulsion wurde in zwei Teile von je 950 g aufgeteilt.

Zur ersten Hälfte wurde bei Raumtemperatur und unter langsamem Rühren eine Lösung von 7,0 g Diethylentriamin in 71 g deionisiertem Wasser gegeben, zum zweiten Teil in entsprechender Weise eine Lösung von 6,0 g Guanidin in 68 g deionisiertem Wasser. Die sich bildenden Dispersionen wurden innerhalb von 2 Stunden auf 60°C aufgeheizt und nach Erreichen dieser Temperatur noch 4 Stunden langsam weitergerührt.

Danach wurden die Kapseldispersionen wie folgt charakterisiert und analysiert:

| | Kapseldispersion hergestellt mit Diethylentriamin | Kapseldispersion hergestellt mit Guanidin |
|---|---|---|
| Kapselgehalt bestimmt durch Trocknung bei 150°C bis zur Gewichtskonstanz | ca. 40 % | ca. 39 % |
| mittlerer Kapseldurchmesser | 7,4 µm | 7,7 µm |
| Viskosität gemessen im Brookfield-Viskosimeter bei Raumtemperatur | 105 mPa.s | 120 mPa.s |
| Dichtigkeit (dicht bedeutet keine erkennbare Verfärbung nach Vermischung mit verdünnter Kieselsollösung, Aufstrich auf Rohpapier und Trocknung bei 70°C für 2 Stunden) | dicht | dicht |
| Intensitätswert (bestimmt wie in Beispiel 1 beschrieben) | 0,39 | 0,44 |
| Schriftintensität (ein mit 2 g Kapseln/m² beschichtetes Papier wurde mit der Kapselseite auf ein mit einem Entwickler beschichtetes Papier gelegt, beide Papiere in einer elektrischen Schreibmaschine auf der Oberseite des Kapselpapiers mit dem Buchstaben "W" bedruckt und der sich auf der Entwicklerseite bildende Abdruck mit einem Reflexionsmeßgerät (Elrephomat, Zeiss-Jena) vermessen. Höhere Zahlenwerte zeigen ein intensiveres Schriftbild an) | 31,2 | 33,9 |

Die vorstehende Tabelle zeigt, daß erfindungsgemäße Kapseln (hergestellt mit Guanidin) hinsichtlich der zu erzielenden Intensitätswerte und Schriftintensitäten Kapseln überlegen sind, die nach dem Stand der Technik (mit Diethylentriamin) hergestellt wurden. Die sonstigen Eigenschaften und Meßwerte sind bei den beiden Kapseltypen nicht wesentlich unterschiedlich.

## Patentansprüche

1. Mikrokapseln, **dadurch gekennzeichnet, daß** ihre Wände aus Umsetzungsprodukten von
Guanidinverbindungen der Formel (I) 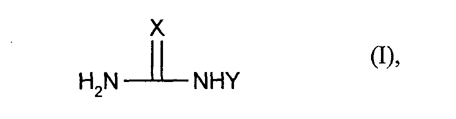 in der X für 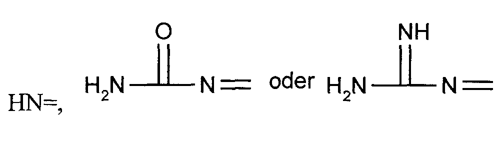 und
Y für H―, NC―, HzN―, HO―, 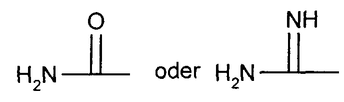
stehen, oder deren Salze mit Säuren
und Polisocyanaten bestehen oder solche Umsetzungsprodukte enthalten.

2. Mikrokapseln nach Anspruch 1, **dadurch gekennzeichnet, daß** es sich bei den Salzen um Salze von Kohlensäure, Salpetersäure, Schwefelsäure, Salzsäure, Kieselsäure, Phosphorsäure, Ameisensäure und/oder Essigsäure handelt.

3. Mikrokapseln nach Ansprüchen 1 und 2, **dadurch gekennzeichnet, daß** man bei ihrer Herstellung Salze von Guanidinverbindungen und 10 bis 100 Äquivalent-% anorganische Basen (bezogen auf Salze der Guanidinverbindungen) einsetzt.

4. Mikrokapseln nach Ansprüchen 1 bis 3, **dadurch gekennzeichnet, daß** man bei ihrer Herstellung pro Mol NCO-Gruppen im Polyisocyanat 0,2 bis 4,0 Mol freie NH₂-Gruppen in Form von Guanidinverbindungen einbringt oder freisetzt.

5. Mikrokapseln nach Ansprüchen 1 bis 4, **dadurch gekennzeichnet, daß** man bei ihrer Herstellung als Polyisocyanate Hexamethylendiisocyanat, Isophorondiisocyanat und/oder freie Isocyanatgruppen aufweisende Derivate des Hexamethylendiisocyanats und des Isophorondiisocyanats, die Biuret-, Isocyanurat-, Uretdion- und/oder Oxadiazintriongruppen enthalten.

6. Mikrokapseln nach Ansprüchen 1 bis 5, **dadurch gekennzeichnet, daß** sie Farbstoffvorläufer und mit Wasser nicht mischbare und inerte Lösungsmittel enthalten, bei denen es sich um aromatische, aliphatische und/oder naphthenische Kohlenwasserstoffe, Carbonsäureester, chlorierte Paraffine, Öle tierischer und pflanzlicher Herkunft, natürliche Fette mit Schmelzpunkten im Bereich 10 bis 35°C und/oder um über 100°C siedende aromatische oder aliphatische Ether handelt.

7. Mikrokapseln nach Ansprüchen 1 bis 6, **dadurch gekennzeichnet, daß** sie diskontinuierlich bei 10 bis 50°C durch Zufügen von so viel einer Guanidinverbindung erhalten wurden, wie stöchiometrisch für die Reaktion aller vorhandenen Isocyanatgruppen benötigt wird oder kontinuierlich bei 25 bis 50°C hergestellt wurden durch Zugabe einer wäßrigen Lösung einer Guanidinverbindung und gegebenenfalls Freisetzung von Guanidinverbindungen aus Salzen mit anorganischer Base.

8. Mikrokapseln nach Ansprüchen 1 bis 7, **dadurch gekennzeichnet, daß** als Guanidinverbindung Guanidincarbonat und keine anorganische Base eingesetzt wird.

9. Verfahren zur Herstellung von Mikrokapseldispersionen, bei dem man eine Ölphase, die ein organisches, mit Wasser nicht mischbares inertes Lösungsmittel, den zu verkapselnden Stoff und ein Polyisocyanat enthält, in einer Wasserphase, die gegebenenfalls Zusatzstoffe enthält, emulgiert und der Emulsion einen Stoff zufügt, der mit Isocyanatgruppen Additionsreaktionen eingehen kann, **dadurch gekennzeichnet, daß** man der Emulsion eine Guanidinverbindung zufügt.

10. Verfahren zur Herstellung von Mikrokapseln nach Anspruch 9, **dadurch gekennzeichnet, daß** als Guanidinverbindung Guanidincarbonat und keine anorganische Base eingesetzt wird.

11. Kohlefreie Durchschreibepapiere, die Farbstoffvorläufer in mikroverkapselter Form enthalten, **dadurch gekennzeichnet, daß** die Wände der Mikrokapseln Umsetzungsprodukte von Guanidinverbindungen mit Polyisocyanaten enthalten.

12. Kohlefreie Durchschreibepapier nach Anspruch 11, **dadurch gekennzeichnet, daß** als Guanidinverbindung Guanidincarbonat und keine anorganische Base eingesetzt wird.

## Claims

1. Microcapsules, **characterized in that** their walls consist of reaction products of guanidine compounds of the formula (I) 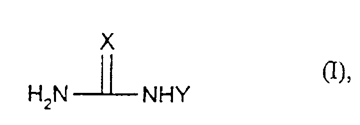 in which X represents HN=, 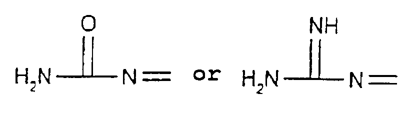 and Y represents
Y **for** H―, NC―, H₂N―, HO―, 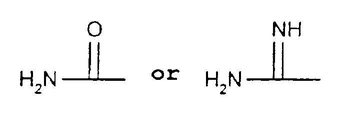
or salts thereof with acids,
and polyisocyanates or contain such reaction products.

2. Microcapsules according to Claim 1, **characterized in that** the salts are salts of carbonic acid, nitric acid, sulphuric acid, hydrochloric acid, silicic acid, phosphoric acid, formic acid and/or acetic acid.

3. Microcapsules according to Claims 1 and 2, **characterized in that** salts of guanidine compounds and 10 to 100 equivalent % of inorganic bases (relative to the salts of guanidine compounds) are used in preparing them.

4. Microcapsules according to Claims 1 to 3, **characterized in that** for each mole of NCO groups in the polyisocyanate 0.2 to 4.0 mol of free NH₂ groups in the form of guanidine compounds are introduced or released in preparing them.

5. Microcapsules according to Claims 1 to 4, **characterized in that** the poly-isocyanates used in preparing them are hexamethylene diisocyanate, isophorone diisocyanate and/or derivatives of hexamethylene diisocyanate and of isophorone diisocyanate having free isocyanate groups and containing biuret, isocyanurate, uretdione and/or oxadiazinetrione groups.

6. Microcapsules according to Claims 1 to 5, **characterized in that** they contain dyestuff precursors and water-immiscible and inert solvents which are aromatic, aliphatic and/or naphthenic hydrocarbons, carboxylic esters, chlorinated paraffins, oils of animal and vegetable origin, natural fats having melting points in the range from 10 to 35°C and/or aromatic or aliphatic ethers boiling above 100°C.

7. Microcapsules according to Claims 1 to 6, **characterized in that** they were obtained batchwise at 10 to 50°C by adding a guanidine compound in such an amount as is required stoichiometrically for the reaction of all isocyanate groups present or were prepared continuously at 25 to 50°C by adding an aqueous solution of a guanidine compound and, if desired, releasing guanidine compounds from salts using an inorganic base.

8. Microcapsules according to Claims 1 to 7, **characterized in that** the guanidine compound used is guanidine carbonate and that no inorganic base is used.

9. Process for preparing microcapsule dispersions in which an oil phase containing an organic, water-immiscible inert solvent, the material to be encapsulated and a polyisocyanate is emulsified in a water phase containing, if desired, additives, and a substance capable of undergoing addition reactions with isocyanate groups is added to the emulsion, **characterized in that** a guanidine compound is added to the emulsion.

10. Process for preparing microcapsules according to Claim 9, **characterized in that** the guanidine compound used is guanidine carbonate and that no inorganic base is used.

11. No-carbon copy papers, containing dyestuff precursors in microencapsulated form, **characterized in that** the walls of the microcapsules contain reaction products of guanidine compounds with polyisocyanates.

12. No-carbon copy papers according to Claim 10, **characterized in that** the guanidine compound used is guanidine carbonate and that no inorganic base is used.

## Revendications

1. Microcapsules **caractérisées en ce que** leurs parois sont constituées par des produits réactionnels de composés de guanidine répondant à la formule (I) 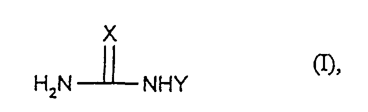 dans laquelle X représente HN=, 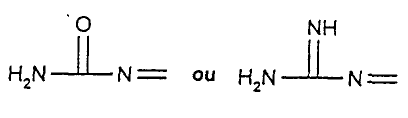 et Y représente H―, NC―, H₂N―, HO―, 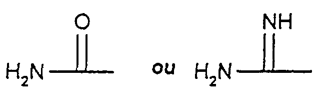 ou de leurs sels avec des acides
et de polyisocyanates ou bien contiennent de tels produits réactionnels.

2. Microcapsules selon la revendication 1, **caractérisées en ce qu'**il s'agit, en ce qui concerne les sels, de sels de l'acide carbonique, de l'acide nitrique, de l'acide sulfurique, de l'acide chlorhydrique, de l'acide silicique, de l'acide phosphorique, de l'acide formique et/ou de l'acide acétique.

3. Microcapsules selon les revendications 1 et 2, **caractérisées en ce qu'**on met en oeuvre, lors de leur préparation, des sels de composés de guanidine et de 10 à 100 équivalents % de bases inorganiques (rapportés aux sels des composés de guanidine).

4. Microcapsules selon les revendications 1 à 3, **caractérisées en ce qu'**on introduit ou on libère, lors de leur préparation, par mole de groupes NCO dans le polyisocyanate, de 0,2 à 4,0 moles de groupes NH₂ libres sous la forme de composés de guanidine.

5. Microcapsules selon les revendications 1 à 4, **caractérisées en ce qu'**on met en oeuvre, lors de leur préparation, à titre de polyisocyanates, l'hexaméthylènediisocyanate, l'isophoronediisocyanate et/ou des dérivés de l'hexaméthylène-diisocyanate et de l'isophoronediisocyanate présentant des groupes isocyanate libres, qui contiennent des groupes biuret, des groupes isocyanurate, des groupes uretdione et/ou des groupes oxadiazinetrione.

6. Microcapsules selon les revendications 1 à 5, **caractérisées en ce qu'**elles contiennent des précurseurs de colorants et des solvants non miscibles à l'eau et inertes, à propos desquels il s'agit d'hydrocarbures aromatiques, aliphatiques et/ou naphténiques, d'esters carboxyliques, de paraffines chlorées, d'huiles d'origine animale et végétale, de graisses naturelles possédant des points de fusion dans le domaine de 10 à 35 °C et/ou d'éthers aromatiques ou aliphatiques possédant des points d'ébullition supérieurs à 100°C.

7. Microcapsules selon les revendications 1 à 6, **caractérisées en ce qu'**on les obtient en discontinu à une température de 10 à 50°C par addition d'une quantité d'un composé de guanidine qui correspond à la quantité stoechiométrique requise pour la réaction de tous les groupes isocyanate présents ou bien on les prépare en continu à une température de 25 à 50°C par addition d'une solution aqueuse d'un composé de guanidine et, le cas échéant, par la libération de composés de guanidine à partir de sels avec une base inorganique.

8. Microcapsules selon les revendications 1 à 7, **caractérisées en ce qu'**on met en oeuvre, à titre de composé de guanidine, du carbonate de guanidine en l'absence de base inorganique.

9. Procédé pour la préparation de dispersions de microcapsules, **caractérisé en ce qu'**on émulsifie une phase huileuse qui contient un solvant organique inerte non miscible à l'eau, la substance à encapsuler et un polyisocyanate, dans une phase aqueuse qui contient le cas échéant des additifs, et on ajoute à l'émulsion une substance qui peut déclencher des réactions d'addition avec des groupes isocyanate, **caractérisé en ce qu'**on ajoute à l'émulsion un composé de guanidine.

10. Procédé pour la préparation de microcapsules selon la revendication 9, **caractérisé en ce qu'**on met en oeuvre, à titre de composé de guanidine, du carbonate de guanidine en l'absence de base inorganique.

11. Papiers autocopiants exempts de carbone qui contiennent des précurseurs de colorants sous forme microencapsulée, **caractérisés en ce que** les parois des microcapsules contiennent des produits réactionnels de composés de guanidine avec des polyisocyanates.

12. Papiers autocopiants exempts de carbone selon la revendication 11, **caractérisés en ce qu'**on met en oeuvre, à titre de composé de guanidine, du carbonate de guanidine en l'absence de base inorganique.
